# EUROPÄISCHE PATENTSCHRIFT

(11) **EP 3 180 182 B1**
(45) Veröffentlichungstag und Bekanntmachung des Hinweises auf die Patenterteilung: **03.10.2018**
(21) Anmeldenummer: 15744173.4
(22) Anmeldetag: 27.07.2015
(51) Int. Cl.: B29C 70/34, B29C 70/08, B29C 70/46, B29C 70/18

(54) **VERFAHREN ZUM HERSTELLEN EINES MIT EINEM UNIDIREKTIONALEN FASERGELEGE VERSEHENEN SMC-BAUTEILES**
METHOD FOR PRODUCING AN SMC COMPONENT PROVIDED WITH A UNIDIRECTIONAL FIBRE SCRIM
PROCÉDÉ DE FABRICATION D'UNE PIÈCE SMC POURVUE D'UNE NAPPE DE FIBRES UNIDIRECTIONNELLES

(30) Priorität: 12.08.2014 DE 102014215964
(43) Veröffentlichungstag der Anmeldung: 21.06.2017
(73) Patentinhaber: Bayerische Motoren Werke Aktiengesellschaft, 80809 München (DE)
(72) Erfinder: ESCHL, Johannes, 82194 Gröbenzell (DE); REISS, Markus, 80798 München (DE); STUTE, Holger, 84032 Landshut (DE)
(86) Internationale Anmeldenummer: PCT/EP2015/067129
(87) Internationale Veröffentlichungsnummer: WO 2016/023735

(56) Entgegenhaltungen:
- EP-A1- 1 535 726
- WO-A1-2013/128312
- DE-T5-112012 003 671
- US-A- 4 526 195

## Beschreibung

Die vorliegende Erfindung betrifft ein Verfahren zum Herstellen eines mit einem unidirektionalen Fasergelege versehenen SMC-Bauteiles.

Ein Sheet Moulding Compound ist ein flächiges Halbzeug aus vernetzungsfähigen Harzen, Fasern, zum Teil mineralischen Füllstoffen und Additiven. Aus SMC hergestellte Bauteile werden seit vielen Jahren industriell eingesetzt. SMC-Bauteile werden beispielsweise in der Fahrzeug- und Bauindustrie sowie für die Infrastruktur eingesetzt. Die Zusammensetzung ist leicht an Kundenwünsche anpassbar, so dass eine starke Spezialisierung und spezielle Nischenmärkte entstanden sind. SMC-Halbzeuge werden auf hydraulischen Presswerkzeugen verarbeitet. Eine Ähnlichkeit mit Blechumformung ist vorhanden, allerdings mit weitaus höheren Umformgraden.

Der Einsatz von unidirektionalen Faserverstärkungen (UD-Faserverstärkungen) ist für das SMC-Verfahren ebenfalls bekannt. Ein unidirektionales Fasergelege ist eine Schicht aus einem Faser-Kunststoff-Verbund, bei dem alle Fasern in eine einzige Richtung orientiert sind. UD-Fasergelege weisen gegenüber ungerichteten faserverstärkten Halbzeugen deutlich andere Verarbeitungseigenschaften auf.

Ferner ist das Umpressen von unidirektionalen Fasergelegen mit SMC-Halbzeugen in Presswerkzeugen bekannt. Nachteilig hierbei sind jedoch die unterschiedlichen Verarbeitungseigenschaften des unidirektionalen Fasergeleges und des wenigstens einen SMC-Halbzeugs. Durch das deutlich andere Fließverhalten des unidirektionalen Fasergeleges und des SMC-Halbzeugs ist die Positionierung speziell des unidirektionalen Fasergeleges beziehungsweise der Fasern im SMC-Bauteil nur schwer kontrollierbar. Beim Verpressen müssen aufwendige Vorkehrungen getroffen werden, damit annähernd die gewünschte Position des unidirektionalen Fasergeleges zum SMC-Halbzeug erreicht wird, siehe hierzu beispielsweise die EP 1 535 726 A1, die den Oberbegriff des Anspruchs 1 offenbart.

Es ist daher die Aufgabe der vorliegenden Erfindung, die voranstehend beschriebenen Nachteile beim Herstellen eines mit einem unidirektionalen Fasergelege versehenen SMC-Bauteiles zumindest teilweise zu beheben. Insbesondere ist es die Aufgabe der vorliegenden Erfindung, ein Verfahren zum Herstellen eines mit einem unidirektionalen Fasergelege versehenen SMC-Bauteiles zur Verfügung zu stellen, bei dem eine prozesssichere Platzierung des unidirektionalen Fasergeleges im entstehenden SMC-Bauteil ermöglicht wird und damit die gewünschten definierten Bauteileigenschaften des fertigen SMC-Bauteils.

Die voranstehende Aufgabe wird durch ein Verfahren zum Herstellen eines mit einem unidirektionalen Fasergelege versehenen SMC-Bauteiles mit den Merkmalen des Anspruches 1 gelöst. Vorteilhafte Weiterbildungen der Erfindung ergeben sich aus den Unteransprüchen.

Das heißt, die voranstehende Aufgabe wird durch ein Verfahren zum Herstellen eines mit einem unidirektionalen Fasergelege versehenen SMC-Bauteiles gelöst, wobei das Verfahren durch nachfolgende Verfahrensschritte gekennzeichnet ist:
a) ein Zuschnitt eines unidirektionalen Fasergeleges wird auf die Werkzeugoberfläche eines Unterteils eines Preformwerkzeugs gelegt,
b) das Preformwerkzeug wird geschlossen, indem ein Preformoberteil und das Preformunterteil des Preformwerkzeugs aufeinander zu bewegt werden, wobei das unidirektionale Fasergelege geformt wird,
c) das unidirektionale Fasergelege wird in dem Preformwerkzeug durch Erwärmung angehärtet und nach Ablauf einer vorbestimmten Zeit wird das angehärtete unidirektionale Fasergelege aus dem Preformwerkzeug entnommen,
d) das entnommene unidirektionale Fasergelege wird zusammen mit wenigstens einem ungerichteten SMC-Halbzeug auf die Werkzeugoberfläche eines Presswerkzeugunterteils in ein Presswerkzeug eingelegt,
e) das Presswerkzeug wird geschlossen, wobei ein Presswerkzeugoberteil und das Presswerkzeugunterteil des Presswerkzeugs zum Verpressen des unidirektionalen Fasergeleges mit dem wenigstes einen ungerichteten SMC-Halbzeug aufeinander zu bewegt werden, und
f) das hergestellte SMC-Bauteil wird durch Erwärmung ausgehärtet.

Die Verfahrensschritte a) bis f) laufen dabei zeitlich nacheinander ab.

Zunächst wird ein Zuschnitt eines unidirektionalen Fasergeleges auf die Werkzeugoberfläche eines Unterteils eines Preformwerkzeugs gelegt. Der Zuschnitt kann jede mögliche Form aufweisen. Insbesondere ist der Zuschnitt ein flächiges Gebilde. Die Fasern des Fasergeleges sind unidirektional ausgerichtet, d.h. alle Fasern in dem Fasergelege sind in eine einzige Richtung orientiert. Die Werkzeugoberfläche des Unterteils des Preformwerkzeugs weist die Form auf, die das unidirektionale Fasergelege einnehmen soll, bevor es mit wenigstens einem SMC-Halbzeug zu einem SMC-Bauteil verpresst werden soll. Nach dem Ablegen des unidirektionalen Fasergeleges auf die Werkzeugoberfläche des Unterteils des Preformwerkzeugs wird das Preformwerkzeug geschlossen. Die Werkzeugoberfläche des Oberteils des Preformwerkzeugs ist vorzugsweise komplementär zu der Werkzeugoberfläche des Unterteils des Preformwerkzeugs ausgebildet. Hierdurch wird das unidirektionale Fasergelege beim Schließen des Preformwerkzeugs überall gleich dick in die gewünscht Endkontur verpresst. Nach oder bereits während des Verpressens des unidirektionalen Fasergeleges wird das unidirektionale Fasergelege in dem Preformwerkzeug durch Erwärmung angehärtet. Die Wärmeübertragung auf das unidirektionale Fasergelege erfolgt dabei vorteilhafterweise direkt über das Ober- und das Unterteil des Preformwerkzeugs. Diese können erhitzt werden, so dass die Wärme des Preformwerkzeugs auf das unidirektionale Fasergelege übertragen wird. Vorzugsweise beträgt die Temperatur an der Werkzeugoberfläche der Preformwerkzeugteile zwischen 100° und 150 °C, insbesondere zwischen 120° und 130°. Das unidirektionale Fasergelege wird maximal auf 180° erhitzt. Alternativ zur Erwärmung des unidirektionalen Fasergeleges in dem Preformwerkzeug ist auch eine Erwärmung des unidirektionalen Fasergeleges außerhalb des Preformwerkzeugs denkbar.

Der Grad der Vorhärtung des unidirektionalen Fasergeleges wird neben der Temperatur durch die Zeit der Erwärmung bestimmt. Das bedeutet, je länger das unidirektionale Fasergelege in dem Preformwerkzeug erwärmt wird, desto durchgehärteter wird das unidirektionale Fasergelege. Vorzugsweise wird das unidirektionale Fasergelege eine halbe Minute bzw. ca. eine halbe Minute pro Millimeter Dicke des Fasergeleges erwärmt. Das heißt, ein 10 mm dickes unidirektionales Fasergelege wird 5 Minuten lang erwärmt, um die gewünschte Vorhärtung zu erreichen. Zusätzlich richtet sich die Zeit des Erwärmens des unidirektionalen Fasergeleges nach der Art des Matrixsystems.

Das unidirektionale Fasergelege wird vorzugsweise bei der Erwärmung derart erhitzt, dass dieses nicht komplett durchhärtet, da sonst das unidirektionale Fasergelege beim anschließenden Verpressen mit dem wenigstens einen SMC-Halbzeug nicht optimal verbunden werden kann.

Nach Ablauf der vorbestimmten Zeit wird das entsprechend angehärtete unidirektionale Fasergelege aus dem Preformwerkzeug entnommen und zusammen mit wenigstens einem ungerichteten SMC-Halbzeug auf die Werkzeugoberfläche eines Presswerkzeugunterteils in ein Presswerkzeug eingelegt. Das Presswerkzeug kann ein zum Preformwerkzeug gesondertes Werkzeug sein. Alternativ dazu kann das Preformwerkzeug das Presswerkzeug selbst darstellen. In dem letzteren Fall kann das angehärtete unidirektionale Fasergelege vor dem Verpressen mit wenigstens einem SMC-Halbzeug in dem Preformwerkzeug gelassen werden.

Vorzugsweise werden ein oder mehrere ungerichtete SMC-Halbzeuge auf das bereits in das Presswerkzeug eingelegte unidirektionale Fasergelege gelegt. Das bedeutet, nur auf einer Seite des unidirektionalen Fasergeleges werden ungerichtete SMC-Halbzeuge angelegt. Dies wird auch als unsymmetrische Umpressung des unidirektionalen Fasergeleges im Presswerkzeug bezeichnet.

SMC-Halbzeuge sind flächige Halbzeuge aus vernetzungsfähigen Harzen und Fasern, d.h. SMC-Halbzeuge sind aus einem hochviskosen Faser-Harz-Verbund hergestellt. Zusätzlich können mineralische Füllstoffe und Additive Teil eines SMC-Halbzeugs sein. Die Viskosität der Faser-Harz-Masse nimmt in der Weiterverarbeitung bei geschlossenem Presswerkzeug unter Hitze und Druck ab. Die Fasern können Kurz- und Langfasern sein.

Das SMC-Halbzeug liegt vorzugsweise als Plattenware vor, bevor es mit dem unidirektionalen Fasergelege im Heißpressverfahren in dem Presswerkzeug verarbeitet wird. Die Zuschlagsstoffe, beispielsweise mineralische Füllstoffe, verhindern das Ankleben der Matrix an der Werkzeugoberfläche des Presswerkzeugunterteils bzw. Presswerkzeugoberteils und machen so das SMC-Halbzeug handhabbar. In der Regel werden als Harze Polyester- oder Vinylesterharze verwendet. Als Fasern können beispielsweise Glasfasern verwendet werden. Alternativ dazu können als Fasern auch Kohlenstofffasern, Basaltfaser oder anderer Fasern verwendet werden. Besteht das SMC-Halbzeug zum Teil aus Kohlenstofffasern, werden als Harz vorzugsweise Epoxidharze verwendet. Zuschlagstoffe können mineralische Füllstoffe, wie Kreide oder Gesteinsmehl, sein. Zusätzliche Additive dienen zur Schwundreduktion. Zusätzlich können Trennmittel in einem SMC-Halbzeug vorgesehen sein, die bei der Erwärmung des SMC-Halbzeugs in dem Presswerkzeug an die Oberfläche des SMC-Halbzeugs wandern, damit dieses am Ende des Pressvorgangs leichter aus dem Presswerkzeug entfernbar ist.

Nach dem Einlegen des unidirektionalen Fasergeleges und des wenigstens einen ungerichteten SMC-Halbzeugs auf die Werkzeugoberfläche des Presswerkzeugunterteils wird das Presswerkzeug geschlossen und das Gebilde aus unidirektionalen Fasergelege und ungerichteten SMC-Halbzeug unter Erwärmung zu einem SMC-Bauteil ausgehärtet. Zur Aushärtung wird das SMC-Bauteil vorzugsweise mit einer Temperatur zwischen 140° bis 160 °C, insbesondere mit einer Temperatur um die 150 °C, erwärmt. Die Zeit der Erwärmung ist abhängig von der Dicke des SMC-Bauteiles.

Durch das erfindungsgemäße Verfahren kann eine prozesssichere Platzierung des unidirektionalen Fasergeleges im Presswerkzeug und damit relativ zum wenigstens einen ungerichteten SMC-Halbzeug erfolgen. Durch die optimale Platzierung des unidirektionalen Fasergeleges im Presswerkzeug und die damit verbundene optimale Anlegung des unidirektionalen Fasergeleges an das ungerichtete SMC-Halbzeug kann eine gewünschte definierte Bauteileigenschaft des hergestellten SMC-Bauteiles erreicht werden. Das durch das Verfahren hergestellte SMC-Bauteil weist deutlich weniger Schwankungen in den Bauteileigenschaften, wie z.B. mechanische Bauteileigenschaften oder Verzug, auf, als SMC-Bauteile, bei denen das unidirektionale Fasergelege vor dem Verpressen mit wenigstens einem ungerichteten SMC-Halbzeug nicht vorher in einem Preformwerkzeug vorgeformt und angehärtet wurde. Das durch dieses Verfahren hergestellte SMC-Bauteil weist eine weniger schwankende Maßhaltigkeit auf als herkömmliche hergestellte SMC-Bauteile mit unidirektionalen Faserverstärkungen. Dadurch, dass das unidirektionale Fasergelege angehärtet und vorgeformt wird, kann sich dieses beim anschließenden Verpressen mit dem wenigstens einen ungerichteten SMC-Halbzeug besser verbinden. Die Positionierung der Fasern des unidirektionalen Fasergeleges ist während des Verpressen mit dem ungerichteten SMC-Halbzeug deutlich besser kontrollierbar als ein nicht vorgeformtes und angehärtetes unidirektionales Fasergelege. D.h., beim Verpressen des unidirektionalen Fasergeleges mit dem wenigstens einen SMC-Halbzeug sind deutlich weniger Vorkehrungen erforderlich, um die optimale Position des unidirektionalen Fasergeleges zu dem wenigstens einen SMC-Halbzeug während des Verpressen zu gewährleisten

Gemäß einer bevorzugten Weiterentwicklung der Erfindung kann bei einem Verfahren vorgesehen sein, dass in Schritt d) zuerst das unidirektionale Fasergelege auf die Werkzeugoberfläche des Presswerkzeugunterteils in das Presswerkzeug eingelegt und anschließend auf das unidirektionale Fasergelege das wenigstens eine SMC-Halbzeug gelegt. Das unidirektionale Fasergelege und die Werkzeugoberfläche des Presswerkzeugunterteils weisen vorzugsweise eine identische Kontur auf. Hierdurch ist das unidirektionale Fasergelege formschlüssig an der Werkzeugoberfläche des Presswerkzeugunterteils gehalten. Dieses formschlüssige Halten des unidirektionalen Fasergeleges sorgt dafür, dass beim anschließenden Verpressen des wenigstens einen SMC-Halbzeugs mit dem unidirektionalen Fasergelege das unidirektionale Fasergelege ein optimales Fließverhalten in Bezug auf das Fließverhalten des SMC-Halbzeugs aufweist. Insbesondere ist das Fließverhalten des unidirektionalen Fasergeleges deutlich besser kontrollierbar, als ein nicht vorgeformtes und angehärtetes unidirektionales Fasergelege. Bei diesem Verfahren wird das wenigstens eine ungerichtete SMC-Halbzeug auf einer Seite des unidirektionalen Fasergeleges mit diesem verpresst.

Wie bereits zuvor erwähnt, ist es vorteilhaft, wenn das unidirektionale Fasergelege formschlüssig an der Werkzeugoberfläche des Presswerkzeugunterteils des Presswerkzeugs gehalten wird. Hierdurch kann das Fließverhalten der Fasern des unidirektionalen Fasergeleges gut gesteuert beziehungsweise kontrolliert werden. Alternativ oder zusätzlich kann das unidirektionale Fasergelege stoffschlüssig an der Werkzeugoberfläche des Presswerkzeugunterteils gehalten werden. Insbesondere kann das unidirektionale Fasergelege an der Werkzeugoberfläche angeklebt werden. Hierdurch wird ein Verrutschen des unidirektionalen Fasergeleges während des Verpressens mit dem wenigstens einen SMC-Halbzeug verhindert.

Ferner kann bei einem Verfahren vorgesehen sein, dass in Schritt d) zuerst das wenigstens eine SMC-Halbzeug auf die Werkzeugoberfläche des Presswerkzeugunterteils in das Presswerkzeug eingelegt und anschließend auf das wenigstens eine SMC-Halbzeug das unidirektionale Fasergelege gelegt wird. Das unidirektionale Fasergelege kann in diesem Fall beispielsweise an der Werkzeugoberfläche des Presswerkzeugoberteils fixiert, insbesondere angeklebt werden.

Gemäß einer besonders bevorzugten Weiterentwicklung der Erfindung kann bei einem Verfahren vorgesehen sein, dass auf die Seite des unidirektionalen Fasergeleges, die der Werkzeugoberfläche des Presswerkzeugunterteils abgewandt ist, wenigstens ein weiteres SMC-Halbzeug aufgelegt wird. Dies bedeutet, dass das unidirektionale Fasergelege beidseitig von SMC-Halbzeug umgeben ist. Hierdurch wird das unidirektionale Fasergelege beim Verpressen im Presswerkzeug von allen Seiten mit SMC-Halbzeug umpresst. Je nach Anforderung ist es möglich, dass auf den beiden Seiten des unidirektionalen Fasergeleges SMC-Halbzeug mit unterschiedlicher Dicke angelegt wird. Bevorzugt ist jedoch, dass auf beiden Seiten des unidirektionalen Fasergeleges SMC-Halbzeug gleicher Dicke und gleicher Eigenschaft angelegt wird, so dass nach dem Verpressen in dem Presswerkzeug ein SMC-Bauteil mit einer homogenen Bauteileigenschaft hergestellt ist.

Während des Verpressens des unidirektionalen Fasergeleges mit dem wenigstens einen ungerichteten SMC-Halbzeug und des anschließenden Erwärmens des Gebildes verbinden sich die Oberflächen des Fasergeleges mit den Oberflächen des SMC-Halbzeugs. D.h., zum Abschluss des Verfahrens haftet das wenigstens eine ungerichtete SMC-Halbzeug an dem unidirektionalen Fasergelege. Um eine noch bessere Haftung zwischen dem unidirektionalen Fasergelege und dem wenigstens einen ungerichteten SMC-Halbzeug zu erreichen, kann bei einem Verfahren vorgesehen sein, dass vor dem Einlegen des unidirektionalen Fasergeleges zusammen mit dem wenigstens einen ungerichteten SMC-Halbzeug in das Presswerkzeug die Oberfläche des unidirektionalen Fasergeleges behandelt, insbesondere aufgeraut wird. Beispielsweise kann die Oberfläche des Fasergeleges zum Aufrauen sandgestrahlt werden.

Ferner wird vorgesehen, dass das unidirektionale Fasergelege durch zumindest ein Positionierelement an dem Presswerkzeugunterteil und/oder an dem Presswerkzeugoberteil in dem Presswerkzeug gehalten wird. Hierdurch kann das unidirektionale Fasergelege optimal in dem Presswerkzeug platziert und beim Pressvorgang besser gehalten werden. So kann das zumindest eine Positionierelement beispielsweise eine reine geometrische Führung, wie beispielsweise eine Rippe oder ein Vorsprung, an der Werkzeugoberfläche des Presswerkzeugunterteils und/oder des Presswerkzeugoberteils sein.

Ferner kann bei einem Verfahren vorgesehen sein, dass zumindest ein Positionierelement aus der Werkzeugoberfläche des Presswerkzeugunterteils und/oder zumindest ein Positionierelement aus der Werkzeugoberfläche des Presswerkzeugoberteils herausfahrbar sind. Diese ermöglichen insbesondere beim beidseitigen Umpressen des unidirektionalen Fasergeleges durch das ungerichtete SMC-Halbzeug ein Fixieren des unidirektionalen Fasergeleges in dem Presswerkzeug vor dem eigentlichen Beginn des Pressvorgangs. Insbesondere sind die herausfahrbaren Positionierelemente derart an dem Presswerkzeugunterteil und dem Presswerkzeugoberteil angeordnet, dass jeweils eine Paar von Positionierelementen beim Schließen des Presswerkzeugs fluchtend zueinander angeordnet sind. Hierdurch klemmen jeweils ein Positionierelement des Presswerkzeugunterteils und ein Positionierelement des Presswerkzeugoberteils das unidirektionale Fasergelege zwischen sich. Das ungerichtete SMC-Halbzeug wird in mehreren Stücken zwischen die Positionierelemente gelegt. Zu Beginn des Zusammenpressens der ungerichteten SMC-Halbzeugstücke und des unidirektionalen Fasergeleges werden die Positionierelemente eingefahren, so dass auch die durch die Positionierelemente entstandenen Zwischenräume beim Verpressen durch SMC-Halbzeug ausgefüllt werden. Die Positionierelemente sind vorzugsweise als herausfahrbare Stifte ausgebildet. Zum Ende des Einfahrens der Positionierelemente verlaufen die Stirnseiten der freien Enden der Positionierelemente vorzugsweise plan zu den Werkzeugoberflächen des Presswerkzeugunterteils beziehungsweise des Presswerkzeugoberteils.

Das Verfahren weist ferner die folgenden Schritte auf:
- wenigstens zwei ungerichtete SMC-Halbzeuge werden neben und/oder zwischen zumindest einem Positionierelement auf die Werkzeugoberfläche des Presswerkzeugunterteils in das Presswerkzeug eingelegt, und ferner die folgenden erfindungsgemäßen Schritte durchgeführt werden:
   - das unidirektionale Fasergelege, welches vorher in einem Preformwerkzeug vorgeformt und angehärtet wurde, wird danach an das zumindest eine Positionierelement und/oder an die wenigstens zwei ungerichteten SMC-Halbzeuge angelegt,
   - auf die Seite des unidirektionalen Fasergeleges, die der Werkzeugoberfläche des Presswerkzeugunterteils abgewandt ist, wird wenigstens ein weiteres SMC-Halbzeug auf das unidirektionale Fasergelege aufgelegt, wobei wenigstens ein Bereich des unidirektionalen Fasergeleges zur Durchführung zumindest eines Positionierelementes des Presswerkzeugoberteils nicht belegt wird,
   - anschließend wird das Presswerkzeug derart weit geschlossen, dass das unidirektionale Fasergelege durch die Positionierelemente fixiert wird,
   - nach der Fixierung des unidirektionalen Fasergeleges wird das Presswerkzeug zum teilweisen Verpressen des unidirektionalen Fasergeleges und der SMC-Halbzeuge weiter geschlossen,
   - vor dem Erreichen der gewünschten Sollwandstärke des SMC-Bauteils werden die Positionierelemente bis zur Werkzeugoberfläche der jeweiligen Presswerkzeugteile zurückgezogen,
   - anschließend wird das Presswerkzeug soweit geschlossen, bis die gewünschte Sollwandstärke des durch Verpressen des unidirektionalen Fasergeleges und der SMC-Halbzeuge entstehenden SMC-Bauteils erreicht ist, und das hergestellte SMC-Bauteil wird während und nach dem Ende des Verpressens durch Erwärmung ausgehärtet.

Durch ein derartiges Verfahren kann eine prozesssichere Platzierung des unidirektionalen Fasergeleges zwischen dem SMC-Halbzeug erreicht werden. Die Positionierelemente sorgen zum einen für eine optimale Positionierung des unidirektionalen Fasergeleges in dem Presswerkzeug, zum anderen gewährleisten sie einen Halt der SMC-Halbzeuge. Durch die Verfahrbarkeit der Positionierelemente wird ferner ermöglicht, dass zum Ende des Verpressens die Zwischenräume zwischen den SMC-Halbzeugen, die vorher von den Positionierelemente ausgefüllt wurden, durch SMC- Halbzeug ausgeführt werden können. Hierdurch ist sichergestellt, dass zum Ende des Verpressens das unidirektionale Fasergelege vollständig durch SMC-Halbzeug umgeben ist. Die Bauteileigenschaft des hergestellten SMC-Bauteiles ist durch dieses Verfahren im gesamten SMC-Bauteil homogenen. Es treten deutlich weniger Schwankungen der Bauteileigenschaften auf, im Vergleich zu herkömmlichen hergestellten SMC-Bauteilen.

Verfahren zum Herstellen eines mit einem unidirektionalen Fasergelege versehenen SMC-Bauteiles werden nachfolgend anhand von Zeichnungen näher erläutert. Es zeigen jeweils schematisch:
- Figur 1: einen Zuschnitt eines unidirektionalen Fasergeleges, der auf die Werkzeugoberfläche eines Unterteils eines Preformwerkzeugs gelegt wird,
- Figur 2: ein geschlossenes Preformwerkzeug, in welchem das unidirektionale Fasergelege geformt und angehärtet wird,
- Figur 3: ein geformtes und angehärtetes unidirektionales Fasergelege und ein ungerichtetes SMC-Halbzeug, welche auf die Werkzeugoberfläche eines Presswerkzeugunterteils in ein Presswerkzeug eingelegt sind,
- Figur 4: ein geschlossenes Presswerkzeug, in welchem das unidirektionale Fasergelege und das ungerichtete SMC-Halbzeug miteinander verpresst und ausgehärtet werden,
- Figur 5: das Anlegen eines unidirektionalen Fasergeleges und einer Vielzahl von ungerichteten SMC-Halbzeugstücken in ein Presswerkzeug mit Positionierelementen,
- Figur 6: den Beginn des Verpressens des unidirektionalen Fasergeleges und der Vielzahl von ungerichteten SMC-Halbzeugstücken in dem Presswerkzeug,
- Figur 7: das Ende des Verpressens des unidirektionalen Fasergeleges und der Vielzahl von ungerichteten SMC-Halbzeugstücken in dem Presswerkzeug und damit das Ende des Herstellens des SMC-Bauteils.

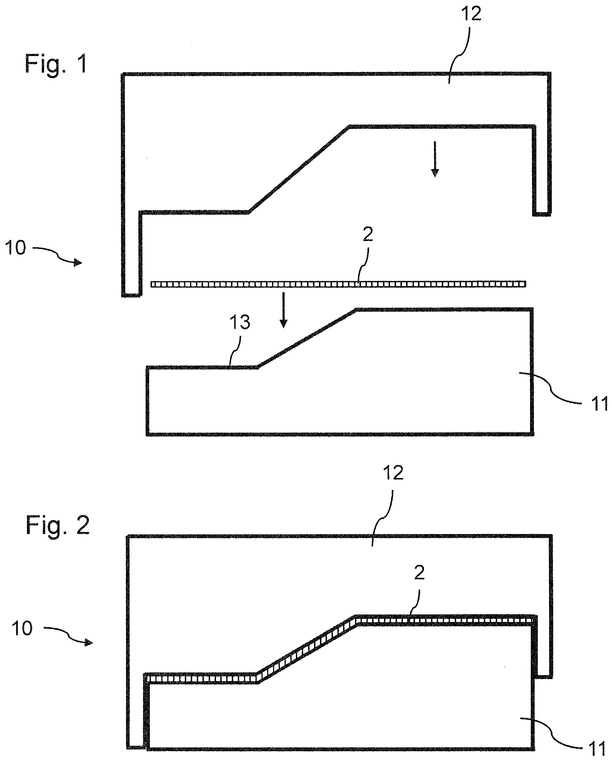

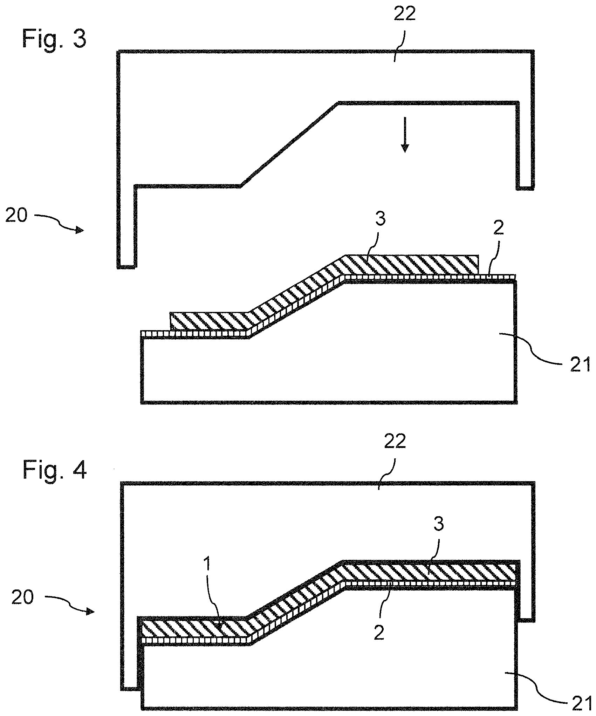

Elemente mit gleicher Funktion und Wirkungsweise sind in den Figuren 1 bis 7 jeweils mit denselben Bezugszeichen versehen.

In den Fig. 1 bis 4 ist ein Verfahren zum Herstellen eines mit einem unidirektionalen Fasergelege 2 versehenen SMC-Bauteiles 1 gezeigt, wobei an nur einer Seite des unidirektionalen Fasergeleges 2 einen SMC-Halbzeug 3 angeordnet wird.

Fig. 1 zeigt schematisch einen Zuschnitt eines unidirektionalen Fasergeleges 2, der auf die Werkzeugoberfläche 13 eines Unterteils 11 eines Preformwerkzeugs 10 gelegt wird. Das unidirektionale Fasergelege 2 weist einen ebenen Zustand auf. Die Fasern im Zuschnitt, welche beispielsweise Glasfasern, Basaltfasern oder auch Kohlenstofffasern sein können, weisen alle gleich Orientierung auf. Die Werkzeugoberfläche 13 des Unterteils 11 des Preformwerkzeugs 10 ist zweifach abgewinkelt und gibt die gewünschte Kontur vor, die das unidirektionale Fasergelege 2 erhalten soll.

Fig. 2 zeigt schematisch das Preformwerkzeug 10 in einer geschlossenen Position, in welchem das unidirektionale Fasergelege 2 geformt und angehärtet wird. D.h., das Preformwerkzeug 10 gemäß Fig. 1 wird geschlossen, indem das Preformoberteil 12 und das Preformunterteil 11 des Preformwerkzeugs 10 aufeinander bewegt werden. Bei dem Schließvorgang wird das unidirektionale Fasergelege 2 entsprechend der Kontur der Werkzeug oberflächen 13 des Unterteils 11 sowie des Oberteils 12 des Preformwerkzeugs 10 unter Druck geformt. Zusätzlich wird das unidirektionale Fasergelege 2 in dem Preformwerkzeug 10 durch Erwärmung erhitzt und dadurch angehärtet. Vorzugsweise wird die Erwärmungstemperatur derart gewählt, dass das unidirektionale Fasergelege 2 nicht aushärtet. Die Erwärmung des unidirektionalen Fasergeleges 2 erfolgt vorzugsweise durch Übertragung von Wärme von dem Unterteil 11 und dem Oberteil 12 des Preformwerkzeugs 10 auf das unidirektionale Fasergelege 2. Vorzugsweise werden sowohl das Unterteil 11 als auch das Oberteil 12 des Preformwerkzeugs 10 auf eine Temperatur zwischen 120°C und 130 °C erhitzt. Nach Ablauf einer vorbestimmten Zeit wird das angehärtete unidirektionale Fasergelege 2 aus dem Preformwerkzeug 10 entnommen. Die Verweilzeit des unidirektionalen Fasergeleges 2 in dem Preformwerkzeug 10, in der das unidirektionale Fasergelege 2 angehärtet wird, richtet sich nach der Dicke des unidirektionalen Fasergeleges 2. Eine ungefähre Faustregel für die Verweilzeit beziehungsweise Erwärmungszeit ist eine halbe Minute pro Millimeter Dicke des Fasergeleges 2. Insbesondere ist die Erwärmungszeit auch abhängig von dem verwendeten Matrixwerkstoff, wie Epoxidharz, etc..

Nach Ablauf der vorbestimmten Zeit ist das Gebilde aus unidirektionalem Fasergelege 2 und SMC-Halbzeug 3 zu einem SMC-Bauteil 1 zusammengefügt worden. Durch das zweistufige Herstellungsverfahren des SMC-Bauteiles 1, nämlich zuerst die Vorbehandlung des unidirektionalen Fasergeleges 2 und des anschließenden Verpressen des vorbehandelten unidirektionalen Fasergeleges 2 mit dem wenigstens einen ungerichteten SMC-Halbzeug 3, können die Bauteileigenschaften des hergestellten SMC-Bauteils 1 homogen gestaltet werden. Insbesondere kann durch die Vorbehandlung des unidirektionalen Fasergeleges 2 die Platzierung des unidirektionalen Fasergeleges 2 in dem Presswerkzeug 20 deutlich besser kontrolliert werden, da das Fließverhalten der bereits behandelten Fasern in dem unidirektionale Fasergelege 2 besser an das Fließverhalten des ungerichteten SMC-Halbzeugs 3 angepasst ist.

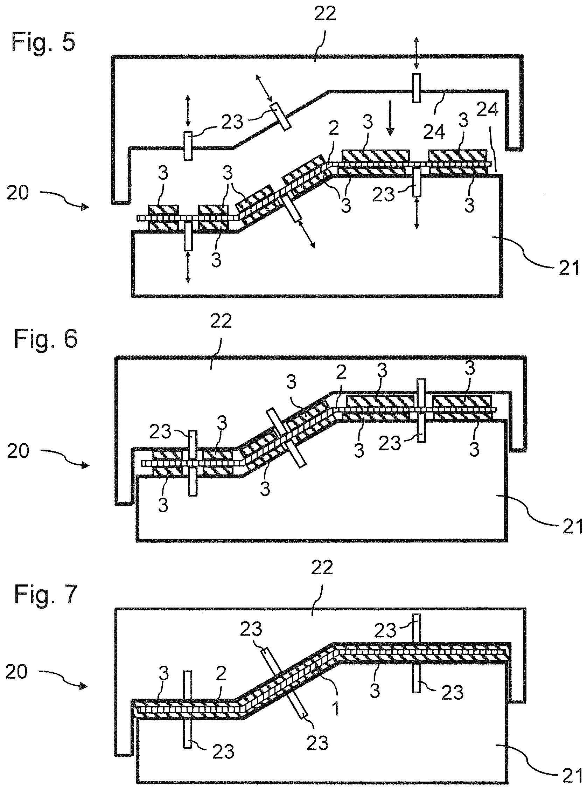

In den Fig. 5 bis 7 ist ein weiteres Verfahren zum Herstellen eines mit einem unidirektionalen Fasergelege 2 versehenen SMC-Bauteiles 1 gezeigt. Bei diesem Verfahren wird das unidirektionale Fasergelege 2 vollständig mit SMC Halbzeug 3 umpresst.

Das Presswerkzeug 20 weißt sowohl in dem Presswerkzeugunterteil 21, als auch in dem Presswerkzeugoberteil 22 verformbare Positionierelemente 23, hier in Form von verfahrbaren Stiften, auf. Diese Positionierelemente 23 dienen dazu, dass das vorgeformte und angehärtete unidirektionale Fasergelege 2 mit Abstand zu den Werkzeugoberflächen 24 des Presswerkzeugunterteils 21 und des Presswerkzeugoberteils 22 in das Presswerkzeug 20 eingelegt werden kann. Da das unidirektionale Fasergelege 2 beidseitig von ungerichtetem SMC-Halbzeug 3 umgeben werden soll, werden zunächst ungerichtete SMC-Halbzeugstücke 3 zwischen bzw. neben den ausgefahrenen Positionierelementen 23 auf die Werkzeugoberfläche 24 des Presswerkzeugunterteils 21 gelegt. Anschließend wird das vorbehandelte unidirektionale Fasergelege 2 an die ausgefahrenen Positionierelemente 23 des Presswerkzeugunterteils 21 angelegt. Nach dem Anlegen des unidirektionalen Fasergeleges 2 an die Positionierelemente 23 des Presswerkzeugunterteils 21 werden auf der dem Presswerkzeugoberteil 22 zugewandten Seite des unidirektionalen Fasergeleges 2 weitere ungerichtete SMC-Halbzeugstücke 3 angelegt. Hierbei werden Lücken zwischen den ungerichteten SMC-Halbzeugstücken 3 freigelassen, um zu ermöglichen, dass beim Schließen des Presswerkzeugs 20 die ausgefahrenen Positionierelemente 23 des Presswerkzeugoberteils 22 an das unidirektionale Fasergelege 2 angelegt werden können. Die Positionierelemente 23 des Presswerkzeugunterteils 21 sowie des Presswerkzeugoberteils 22 sind vorzugsweise derart aufeinander abgestimmt, dass beim Anliegen an dem unidirektionalen Fasergelege 2 jeweils ein Paar von Positionierelementen 23 fluchtend zueinander angeordnet sind.

Nachdem das unidirektionale Fasergelege 2 durch die Positionierelemente 23 des Presswerkzeugunterteils 21 und des Presswerkzeugoberteils 22 in dem Presswerkzeug 20 fixiert worden ist, wird das Presswerkzeug 20 weiter geschlossen, wobei ein erstes Verpressen der ungerichteten SMC-Halbzeugstücke 3 erfolgt. Anschließend werden die Positionierelemente 23 sowohl in das Presswerkzeugunterteil 21 als auch in das Presswerkzeugoberteil 22 derart weit zurückgefahren, bis die Stirnflächen der freien Enden der Positionierelemente 23 in der Ebene der entsprechenden Werkzeugoberfläche 24 des Presswerkzeugunterteils 21 beziehungsweise des Presswerkzeugoberteils 22 liegen. Anschließend wird das Presswerkzeug 20 zur Herstellung des SMC-Bauteiles 1 weiter geschlossen, wobei die ungerichteten SMC-Halbzeugstücke 3 die durch das Zurückziehen der Positionierelemente 23 entstandenen Zwischenräume ausfüllen. Die ungerichteten SMC-Halbzeugstücke 3 und das unidirektionale Fasergelege 2 werden unter Druck und Erwärmung zur Herstellung des SMC-Bauteiles 1 miteinander verbunden. Dabei wird die Wärme auf das Gebilde über das Presswerkzeugunterteil 21 und das Presswerkzeugoberteil 22 übertragen. Damit das entstehende SMC-Bauteil 1 vollständig durchhärtet, werden das Presswerkzeugunterteil 21 und das Presswerkzeugoberteil 22 vorzugsweise auf eine Temperatur von ungefähr 150 °C erhitzt. Die Dauer der Erwärmung richtet sich wieder nach der Dicke des entstehenden SMC-Bauteiles 1.

Um eine bessere Verbindung der ungerichteten SMC-Halbzeuge 3 mit dem vorbehandelten unidirektionalen Fasergelege 2 während des Verpressens im Presswerkzeug 20 zu erhalten, kann die Oberfläche des unidirektionalen Fasergeleges 2 vor dem Einlegen in das Presswerkzeug 20 vorbehandelt, insbesondere durch Sandstrahlung aufgeraut werden.

### Bezugszeichenliste

- 1: SMC-Bauteil
- 2: unidirektionales Fasergelege
- 3: SMC-Halbzeug

- 10: Preformwerkzeug
- 11: Unterteils eines Preformwerkzeugs
- 12: Oberteil eines Preformwerkzeugs
- 13: Werkzeugoberfläche

- 20: Presswerkzeug
- 21: Presswerkzeugunterteil
- 22: Presswerkzeugoberteil
- 23: Positionierelement
- 24: Werkzeugoberfläche

## Patentansprüche

1. Verfahren zum Herstellen eines mit einem unidirektionalen Fasergelege (2) versehenen SMC-Bauteiles (1), wobei das unidirektionale Fasergelege (2) als eine Schicht aus einem Faser-Kunststoff-Verbund, bei dem alle Fasern in eine einzige Richtung orientiert sind, ausgebildet ist,
wobei das Verfahren nachfolgende Verfahrensschritte aufweist:
a) ein Zuschnitt eines unidirektionalen Fasergeleges (2) wird auf die Werkzeugoberfläche (13) eines Unterteils (11) eines Preformwerkzeugs (10) gelegt,
b) das Preformwerkzeug (10) wird geschlossen, indem ein Preformoberteil (12) und das Preformunterteil (11) des Preformwerkzeugs (10) aufeinander zu bewegt werden, wobei das unidirektionale Fasergelege (2) geformt wird,
c) das unidirektionale Fasergelege (2) wird in dem Preformwerkzeug (10) durch Erwärmung angehärtet und nach Ablauf einer vorbestimmten Zeit wird das angehärtete unidirektionale Fasergelege (2) aus dem Preformwerkzeug (10) entnommen,
d) das entnommene unidirektionale Fasergelege (2) wird zusammen mit wenigstens einem ungerichteten SMC-Halbzeug (3), wobei das SMC-Halbzeug (3) als ein flächiges Halbzeug aus vernetzungsfähigen Harzen, Fasern, zum Teil mineralischen Füllstoffen und Additiven ausgebildet ist, auf die Werkzeugoberfläche (24) eines Presswerkzeugunterteils (21) in ein Presswerkzeug (20) eingelegt,
e) das Presswerkzeug (20) wird geschlossen, wobei ein Presswerkzeugoberteil (22) und das Presswerkzeugunterteil (21) des Presswerkzeugs (20) zum Verpressen des unidirektionalen Fasergeleges (2) mit dem wenigstes einen ungerichteten SMC-Halbzeug (3) aufeinander zu bewegt werden,
f) das hergestellte SMC-Bauteil (1) wird durch Erwärmung ausgehärtet,
wobei das unidirektionale Fasergelege (2) durch zumindest ein Positionierelement (23) an dem Presswerkzeugunterteil (21) und/oder an dem Presswerkzeugoberteil (22) in dem Presswerkzeug (20) gehalten wird,
und wobei ferner vorgesehen ist,
dass wenigstens zwei ungerichtete SMC-Halbzeuge (3) neben und/oder zwischen zumindest einem Positionierelement (23) auf die Werkzeugoberfläche (24) des Presswerkzeugunterteils (21) in das Presswerkzeug (20) eingelegt werden, wobei das Verfahren durch nachfolgende Verfahrensschritte gekennzeichnet ist:
das unidirektionale Fasergelege (2) danach an das zumindest eine Positionierelement (23) und/oder an die wenigstens zwei ungerichteten SMC-Halbzeuge (3) angelegt wird,
dass auf die Seite des unidirektionalen Fasergeleges (2), die der Werkzeugoberfläche (24) des Presswerkzeugunterteils (21) abgewandt ist, wenigstens ein weiteres SMC-Halbzeug (3) auf das unidirektionale Fasergelege (2) aufgelegt wird, wobei wenigstens ein Bereich des unidirektionalen Fasergeleges (2) zur Durchführung zumindest eines Positionierelementes (23) des Presswerkzeugoberteils (22) nicht belegt wird,
dass anschließend das Presswerkzeug (20) derart weit geschlossen wird, dass das unidirektionale Fasergelege (2) durch die Positionierelemente (23) fixiert wird,
dass nach der Fixierung des unidirektionalen Fasergeleges (2) das Presswerkzeug (20) zum teilweisen Verpressen des unidirektionalen Fasergeleges (2) und der SMC-Halbzeuge (3) weiter geschlossen wird,
dass vor dem Erreichen der gewünschten Sollwandstärke des SMC-Bauteils (1) die Positionierelemente (23) bis zur Werkzeugoberfläche (24) der jeweiligen Presswerkzeugteile (21, 22) zurückgezogen werden,
dass anschließend das Presswerkzeug (20) soweit geschlossen wird, bis die gewünschte Sollwandstärke des durch Verpressen des unidirektionalen Fasergeleges (2) und der SMC-Halbzeuge (3) entstehenden SMC-Bauteils (1) erreicht ist, und
dass das hergestellte SMC-Bauteil (1) durch Erwärmung ausgehärtet wird.

2. Verfahren gemäß Anspruch 1,
**dadurch gekennzeichnet, dass**
in Schritt d) zuerst das unidirektionale Fasergelege (2) auf die Werkzeugoberfläche (24) des Presswerkzeugunterteils (21) in das Presswerkzeug (20) eingelegt und anschließend auf das unidirektionale Fasergelege (2) das wenigstens eine SMC-Halbzeug (3) gelegt wird.

3. Verfahren gemäß Anspruch 2,
**dadurch gekennzeichnet, dass**
das unidirektionale Fasergelege (2) formschlüssig oder stoffschlüssig an der Werkzeugoberfläche (24) des Presswerkzeugunterteils (21) gehalten wird.

4. Verfahren gemäß Anspruch 1,
**dadurch gekennzeichnet, dass**
in Schritt d) zuerst das wenigstens eine SMC-Halbzeug (3) auf die Werkzeugoberfläche (24) des Presswerkzeugunterteils (21) in das Presswerkzeug (20) eingelegt und anschließend auf das wenigstens eine SMC-Halbzeug (3) das unidirektionale Fasergelege (2) gelegt wird.

5. Verfahren gemäß Anspruch 4,
**dadurch gekennzeichnet, dass**
auf die Seite des unidirektionalen Fasergeleges (2), die der Werkzeugoberfläche (24) des Presswerkzeugunterteils (21) abgewandt ist, wenigstens ein weiteres SMC-Halbzeug (3) aufgelegt wird.

6. Verfahren gemäß einem der vorangegangenen Ansprüche,
**dadurch gekennzeichnet, dass**
vor dem Einlegen des unidirektionalen Fasergeleges (2) zusammen mit dem wenigstens einen ungerichteten SMC-Halbzeug (3) in das Presswerkzeug (20) die Oberfläche des unidirektionalen Fasergeleges (2) behandelt, insbesondere aufgeraut wird.

7. Verfahren gemäß einem der vorangegangenen Ansprüche,
**dadurch gekennzeichnet, dass**
zumindest ein Positionierelement (23) aus der Werkzeugoberfläche (24) des Presswerkzeugunterteils (21) und/oder zumindest ein Positionierelement (23) aus der Werkzeugoberfläche (24) des Presswerkzeugoberteils (22) herausfahrbar sind.

## Claims

1. A method for producing an SMC component (1) provided with a unidirectional laid fibre fabric (2), wherein the unidirectional laid fibre fabric (2) is formed as a layer of a fibre/plastics material composite in which all the fibres are oriented in a single direction, wherein the method has the following method steps:
a) a blank of a unidirectional laid fibre fabric (2) is laid on the mould surface (13) of a bottom part (11) of a preforming die (10),
b) the preforming die (10) is closed by moving a top preforming part (12) and the bottom preforming part (11) of the preforming die (10) towards each other, thus forming the unidirectional laid fibre fabric (2),
c) the unidirectional laid fibre fabric (2) is initially cured by heating in the preforming die (10) and once a predetermined time has elapsed the initially cured unidirectional laid fibre fabric (2) is removed from the preforming die (10),
d) the removed unidirectional laid fibre fabric (2), together with at least one non-directional SMC semi-finished product (3), wherein the SMC semi-finished product (3) being formed as a sheet-like semi-finished product of cross-linkable resin, fibres, partly mineral fillers and additives, is placed in a compression mould (20) on the mould surface (24) of a bottom compression mould part (21),
e) the compression mould (20) is closed, with a top compression mould part (22) and the bottom compression mould part (21) of the compression mould (20) being moved towards one another to press mould the unidirectional laid fibre fabric (2) with the at least one non-directional SMC semi-finished product (3),
f) the SMC component (1) produced is fully cured by heating, the unidirectional laid fibre fabric (2) being held in the compression mould (20) by at least one positioning element (23) on the bottom compression mould part (21) and/or on the top compression mould part (22),
and wherein provision is further made
for at least two non-directional SMC semi-finished products (3) to be placed in the compression mould (20) next to and/or between at least one positioning element (23) on the mould surface (24) of the bottom compression mould part (21), the method being **characterised by** the following method steps:
the unidirectional laid fibre fabric (2) thereafter is placed on the at least one positioning element (23) and/or on the at least two non-directional SMC semi-finished products (3),
that on that side of the unidirectional laid fibre fabric (2) which is remote from the mould surface (24) of the bottom compression mould part (21) at least one further SMC semi-finished product (3) is laid up on the unidirectional laid fibre fabric (2), with at least one region of the unidirectional laid fibre fabric (2) not being occupied in order to pass through at least one positioning element (23) of the top compression mould part (22),
that then the compression mould (20) is closed so far that the unidirectional laid fibre fabric (2) is fixed by the positioning elements (23),
that after the fixing of the unidirectional laid fibre fabric (2) the compression mould (20) is closed further to partially press mould the unidirectional laid fibre fabric (2) and the SMC semi-finished products (3),
that prior to reaching the desired wall thickness of the SMC component (1) the positioning elements (23) are retracted as far as the mould surface (24) of the respective compression mould parts (21, 22),
that the compression mould (20) is then closed so far that the desired wall thickness of the SMC component (1) which arises due to press moulding the unidirectional laid fibre fabric (2) and the SMC semi-finished products (3) is obtained, and
that the SMC component (1) produced is fully cured by heating.

2. A method according to Claim 1,
**characterised in that**
in step d) first the unidirectional laid fibre fabric (2) is placed on the mould surface (24) of the bottom compression mould part (21) in the compression mould (20) and then the at least one SMC semi-finished product (3) is laid on the unidirectional laid fibre fabric (2).

3. A method according to Claim 2,
**characterised in that**
the unidirectional laid fibre fabric (2) is held in positive manner or by a material-formed bond on the mould surface (24) of the bottom compression mould part (21).

4. A method according to Claim 1,
**characterised in that**
in step d) first of all the at least one SMC semi-finished product (3) is laid in the compression mould (20) on the mould surface (24) of the bottom compression mould part (21) and then the unidirectional laid fibre fabric (2) is laid on the at least one SMC semi-finished product (3).

5. A method according to Claim 4,
**characterised in that**
at least one further SMC semi-finished product (3) is placed on that side of the unidirectional laid fibre fabric (2) which is remote from the mould surface (24) of the bottom compression mould part (21).

6. A method according to one of the preceding claims,
**characterised in that**
prior to the placing of the unidirectional laid fibre fabric (2) together with the at least one non-directional SMC semi-finished product (3) in the compression mould (20), the surface of the unidirectional laid fibre fabric (2) is treated, especially roughened.

7. A method according to one of the preceding claims,
**characterised in that**
at least one positioning element (23) can be moved out of the mould surface (24) of the bottom compression mould part (21) and/or at least one positioning element (23) can be moved out of the mould surface (24) of the top compression mould part (22).

## Revendications

1. Procédé d'obtention d'un composant moulé en feuilles SMC (1) comportant une nappe de fibres unidirectionnelles (2), la nappe de fibres unidirectionnelles (2) étant réalisée sous la forme d'une couche d'un composite fibres-matériau synthétiques dans lequel toutes les fibres sont orientées dans une seule direction,
ce procédé comprenant les étapes suivantes :
a) un flan d'une nappe de fibres unidirectionnelles (2) est déposée sur la surface supérieure (13) d'une partie inférieure (11) d'un outil de préformage (10),
b) l'outil de préformage (10) est fermé en déplaçant l'une sur l'autre une partie supérieure de l'outil de préformage (12) et la partie inférieure (11) de l'outil de préformage (10), la nappe de fibres unidirectionnelles (2) étant formée,
c) la nappe de fibres unidirectionnelles (2) est durcie par chauffage, dans l'outil de préformage (10) et, après écoulement d'une durée prédéfinie, la nappe de fibres unidirectionnelles (2) durcie est extraite de cet outil de préformage (10),
d) la nappe de fibres unidirectionnelles (2) extraite est appliquée dans un outil de moulage par compression (20) sur la surface supérieure (24) d'une partie inférieure (21) de cet outil (20), avec au moins un produit semi-fini SMC (3) non orienté, le produit semi-fini SMC (3) étant réalisé sous la forme d'un produit semi-fini plan renfermant des résines réticulables, des fibres, des charges en partie métalliques et des additifs,
e) l'outil de moulage par compression (20) est fermé, une partie supérieure de cet outil de moulage par compression (22) et la partie inférieure (21) de cet outil de moulage par compression (20) étant déplacées l'une sur l'autre pour comprimer la nappe de fibres unidirectionnelles (2) avec le produit fini SMC non orienté (3),
f) le composant SMC (1) obtenu est durci par chauffage, la nappe de fibres unidirectionnelles (2) étant maintenue dans l'outil de moulage par compression (20) sur la partie inférieure (21) de cet outil de moulage par compression et/ou sur la partie supérieure (22) de cet outil de moulage par compression par au moins un élément de positionnement (23),
et, en outre,
au moins deux produits semi-finis SMC (3) non orientés sont déposés dans l'outil de moulage par compression (20) sur la surface supérieure (24) de la partie inférieure (21) de cet outil de moulage par compression (20) à proximité et/ou entre au moins un élément de positionnement (23),
ce procédé étant **caractérisé par** les étapes suivantes :
la nappe de fibres unidirectionnelles (2) est ensuite déposée sur l'élément de positionnement (23) et/ou sur les deux produits semi-finis SMC (3) non orientés,
sur la face de la nappe de fibres unidirectionnelles (2) qui est tournée à l'opposé de la surface supérieure (24) de la partie inférieure (21) de l'outil de moulage par compression, au moins un autre produit semi-fini SMC (3) est déposé sur la nappe de fibres unidirectionnelles (2), au moins une zone de la nappe de fibres unidirectionnelles (2) n'étant pas occupée pour permettre le passage d'au moins un élément de positionnement (23) de la partie supérieure (22) de l'outil de moulage par compression,
l'outil de moulage par compression (20) est ensuite suffisamment fermé pour que la nappe de fibres unidirectionnelles (2) soit fixée par les éléments de positionnement (23),
après la fixation de la nappe de fibres unidirectionnelles (2) l'outil de moulage par compression (20) est plus largement fermé pour comprimer partiellement la nappe de fibres unidirectionnelles (2) et le produit semi-fini SMC (3),
avant d'avoir atteint l'épaisseur de paroi de consigne souhaitée du composant SMC (1), les éléments de positionnement (23) sont retirés jusqu'à la surface supérieure (24) de la partie respective (21, 22) de l'outil de moulage par compression,
l'outil de moulage par compression (20) est ensuite suffisamment fermé pour que l'épaisseur de paroi de consigne souhaitée du composant SMC (1) obtenu par compression de la nappe de fibres unidirectionnelles (2) et du produit semi-fini SMC (3) soit atteinte, et
le composant SMC (1) obtenu est durci par chauffage.

2. Procédé conforme à la revendication 1,
**caractérisé en ce que**
lors de l'étape d), la nappe de fibres unidirectionnelles (2) est tout d'abord déposée dans l'outil de moulage par compression (20) sur la surface supérieure (24) de la partie inférieure (21) de cet outil de moulage par compression, puis, le produit semi-fini SMC (3) est déposé sur la nappe de fibres unidirectionnelles (2).

3. Procédé conforme à la revendication 2,
**caractérisé en ce que**
la nappe de fibres unidirectionnelles (2) est maintenue par une liaison par la forme ou par une liaison par la matière sur la surface supérieure (24) de la partie inférieure (21) de l'outil de moulage par compression.

4. Procédé conforme à la revendication 1,
**caractérisé en ce que**
lors de l'étape d), le produit semi-fini SMC (3) est tout d'abord déposé dans l'outil de moulage par compression (20) sur la surface supérieure (24) de la partie inférieure (21) de cet outil de moulage par compression, puis, la nappe de fibres unidirectionnelles (2) est déposée sur le produit semi-fini SMC (3).

5. Procédé conforme à la revendication 4,
**caractérisé en ce qu'**
au moins un autre produit fini SMC (3) est déposé sur la face de la nappe de fibres unidirectionnelles (2) qui est tournée à l'opposé de la surface supérieure (24) de la partie inférieure de l'outil de moulage par compression (21).

6. Procédé conforme à l'une des revendications précédentes,
**caractérisé en ce qu'**
avant le dépôt de la nappe de fibres unidirectionnelles (2) avec le produit semi-fini SMC non orienté (3) dans l'outil de moulage par compression (20) la surface de la nappe de fibres unidirectionnelles (2) est traitée, et en particulier rendue rugueuse.

7. Procédé conforme à l'une des revendications précédentes,
**caractérisé en ce qu'**
au moins un élément de positionnement (23) peut être extrait de la surface supérieure (24) de la partie inférieure (21) de l'outil de moulage par compression et/ou au moins un élément de positionnement (23) peut être extrait de la surface supérieure (24) de la partie supérieure (22) de l'outil de moulage par compression.
